# EUROPEAN PATENT SPECIFICATION

(11) **EP 3 641 265 B1**
(45) Date of publication and mention of the grant of the patent: **09.06.2021**
(21) Application number: 19189538.2
(22) Date of filing: 28.12.2012
(51) Int. Cl.: H04L 29/06, H04L 29/08, H04L 12/26, H04L 12/14, H04L 29/12

(54) **METHOD, APPARATUS, AND NETWORK SYSTEM FOR IDENTIFYING WEBSITE**
VERFAHREN, VORRICHTUNG UND NETZWERKSYSTEM ZUR IDENTIFIZIERUNG EINER WEBSITE
PROCÉDÉ, APPAREIL ET SYSTÈME DE RÉSEAU POUR L'IDENTIFICATION D'UN SITE WEB

(43) Date of publication of application: 22.04.2020
(62) Divisional of application: 12890875.3
(73) Proprietor: Huawei Technologies Co., Ltd., Guangdong 518129 (CN)
(72) Inventor: YANG, Wenhong, Shenzhen, Guangdong 518129 (CN)
(74) Representative: Isarpatent

(56) References cited:
- US-A1- 2007 180 510
- US-B1- 7 778 194
- GUTMANN P: "A reliable, scalable general-purpose certificate store", COMPUTER SECURITY APPLICATIONS, 2000. ACSAC '00. 16TH ANNUAL CONFERENC E NEW ORLEANS, LA, USA 11-15 DEC. 2000, LOS ALAMITOS, CA, USA,IEEE COMPUT. SOC, US, 11 December 2000 (2000-12-11), pages 278-287, XP010529825, DOI: 10.1109/ACSAC.2000.898882 ISBN: 978-0-7695-0859-7

## Description

### TECHNICAL FIELD

The present invention relates to the field of communications technologies, and in particular, to a method a deep packet inspection device, and a network system for identifying a website.

### BACKGROUND

In an existing network operation process, for the purpose of managing network visiting behavior of a user, for example, filtering a website visited by the user, performing charging according to the website visited by the user, or implementing various website package services promoted by an operator, the website visited by the user needs to be identified. When the user visits a website over a hypertext transfer protocol (Hypertext Transfer Protocol, HTTP), the website visited by the user can be identified by analyzing content of an HTTP packet of the user because a packet is transmitted in a plaintext manner. However, when the user visits a website over hypertext transfer protocol secure (Hypertext Transfer Protocol Secure, HTTPS), the website visited by the user cannot be identified from a packet generated in a process that the user visits the website because an application-layer packet is encapsulated in an encrypted transmission tunnel.US 7, 778, 194 B1 relates to a classification of encrypted network traffic. A traffic monitoring device can be arranged between the first network device and the second network device. The traffic monitoring device comprises a traffic classification engine, and the traffic classification engine includes and encrypted flow module. The traffic classification engine may use handshake attributes to classify the data flow into a traffic class.

US 2007 / 180 510 A1 relates to a system for obtaining information which can be used for URL filtering.

### SUMMARY

Embodiments of the present invention provide a method, a deep packet inspection device, and a system for identifying a website, so that when a user visits a website over an HTTPS protocol, the website visited by the user can be identified.

In a first aspect, an embodiment of the present invention provides a method for identifying a website, including:
when a client visits a website over hypertext transfer protocol secure HTTPS, acquiring a certificate message that is generated in a process of key negotiation between the client and a server of the website;
obtaining, by parsing the certificate message, a server certificate of the website visited by the client
and
identifying a key value of the server certificate according to a preset algorithm;characterized by
obtaining a key value of the server certificate according to a preset algorithm;
searching a website key value table according to the key value of the server certificate, where the website key value table records a website name and a key value of a server certificate of a website, and the key value of the server certificate of the website in the website key value table is obtained according to the preset algorithm; and
if a website name corresponding to the key value of the server certificate is found in the website key value table, identifying the website visited by the client according to the website name.

In a first possible implementation manner of the first aspect, the method for identifying a website further includes:
determining a format type of the server certificate if the website name corresponding to the key value of the server certificate is not found in the website key value table;
obtaining a domain name of the website from a subject attribute of the server certificate if the format type of the server certificate is an X.509 format, and identifying, according to the domain name of the website, the website visited by the client; and
obtaining the domain name of the website from a user identifier attribute of the server certificate if the format type of the server certificate is a PGP format, and identifying, according to the domain name of the website, the website visited by the client.

With reference to the first aspect, in a second possible implementation manner of the first aspect, the method further includes:
not collecting charging statistics on traffic of the client if the website name corresponding to the key value of the server certificate is found in the website key value table; and
collecting charging statistics on the traffic of the client if the website name corresponding to the key value of the server certificate is not found in the website key value table.

With reference to the first aspect, the first possible implementation manner of the first aspect, or the second possible implementation manner of the first aspect, in a third possible implementation manner, the acquiring a certificate message that is generated in a process of key negotiation between the client and a server includes:
intercepting a packet that is generated in a process of the key negotiation between the client and the server; and
identifying the certificate message according to a HandshakeType field in the packet.

In a second aspect, an embodiment of the present invention provides a deep packet inspection device, including:
an acquiring module, configured to, when a client visits a website over hypertext transfer protocol secure HTTPS, acquire a certificate message that is generated in a process of key negotiation between the client and a server of the website;
a parsing module, configured to obtain, by parsing the certificate message acquired by the acquiring module, a server certificate of the website visited by the client and
an identifying module configured to identify the website visited by the client;
characterized by:
a calculating module, configured to obtain a key value of the server certificate according to a preset algorithm;
a searching module, configured to search a website key value table according to the key value of the server certificate obtained by the calculating module, where the website key value table records a website name and a key value of a server certificate of a website, and the key value of the server certificate of the website in the website key value table is obtained according to the preset algorithm; and
wherein the identifying module is configured to, if the searching module finds a website name corresponding to the key value of the server certificate in the website key value table, identify the website visited by the client according to the website name.

In a first possible implementation manner of the second aspect, the deep packet inspection device further includes:
a setting module, configured to receive and store the website key value table sent by a management server, where the website key value table includes a website name of at least one website and a key value of a server certificate of the website.

With reference to the second aspect or the first possible implementation manner of the second aspect, in a second possible implementation manner of the second aspect, the deep packet inspection device further includes:
a determining module, configured to, when the searching module does not find the website name corresponding to the key value of the server certificate in the website key value table, determine a format type of the server certificate obtained by the parsing module, and trigger the identifying module, where:
the identifying module is further configured to obtain a domain name of the website from a subject attribute of the certificate when the determining module determines that the format type of the server certificate of the website is an X.509 format, and identify, according to the domain name of the website, the website visited by the client; and obtain the domain name of the website from a user identifier attribute of the certificate when the determining module determines that the format type of the server certificate of the website is a PGP format, and identify, according to the domain name of the website, the website visited by the client.

With reference to the second aspect or the first possible implementation manner of the second aspect, in a third possible implementation manner of the second aspect, the deep packet inspection device further includes:
a traffic management module, configured to not to collect charging statistics on traffic of the client when the searching module finds the website name corresponding to the key value of the server certificate in the website key value table; and collect charging statistics on the traffic of the client when the searching module does not find the website name corresponding to the key value of the server certificate in the website key value table.

With reference to the second aspect, the first possible implementation manner of the second aspect, the second possible implementation manner of the second aspect, or the third possible implementation manner of the second aspect, in a fourth possible implementation manner of the second aspect, the acquiring module is specifically configured to intercept a packet that is generated in a process of the key negotiation between the client and the server of the website, and identify the certificate message according to a HandshakeType field in the packet.

In a third aspect, an embodiment of the present invention provides a network system, including a client, at least one website server, and the deep packet inspection device according to any one of the foregoing implementation manners, where:
the client is configured to send a visit request based on an HTTPS protocol to the at least one website server, and perform key negotiation with the at least one website server; and
the website server is configured to receive the network visit request sent by the client, and perform key negotiation with the client according to the network visit request.

According to the method for identifying a website provided in the embodiments of the present invention, when a client visits a website over an HTTPS protocol, a server certificate of the website visited by the client is acquired, a key value of the server certificate is obtained according to a preset algorithm, a website key value table is searched for the obtained key value, and the website visited by the client is identified by using a website name that corresponds to the key value of the server certificate and is found in the website key value table. In this way, the website visited by the client can be identified even when the client visits the website over the HTTPS protocol.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a diagram of an application scenario of a method for identifying a website according to an embodiment of the present invention;
FIG. 2 is a flowchart of a method for identifying a website according to an embodiment of the present invention;
FIG. 3 is a flowchart of another method for identifying a website according to an embodiment of the present invention;
FIG. 4 is a signaling diagram of key negotiation performed between a client and a server of a website according to an embodiment of the present invention;
FIG. 5 is a flowchart of a method for analyzing a server certificate in a method for identifying a website according to an embodiment of the present invention;
FIG. 6 is a schematic diagram of a physical structure of a deep packet inspection device according to an embodiment of the present invention;
FIG. 7 is a schematic structural diagram of another deep packet inspection device according to an embodiment of the present invention; and
FIG. 8 is a schematic structural diagram of a system for identifying a website according to an embodiment of the present invention.

### DESCRIPTION OF EMBODIMENTS

To make the solutions in the present invention more comprehensible for persons skilled in the art, the following clearly and completely describes the technical solutions in the embodiments of the present invention with reference to the accompanying drawings in the embodiments of the present invention. Apparently, the embodiments to be described are merely a part rather than all of the embodiments of the present invention.

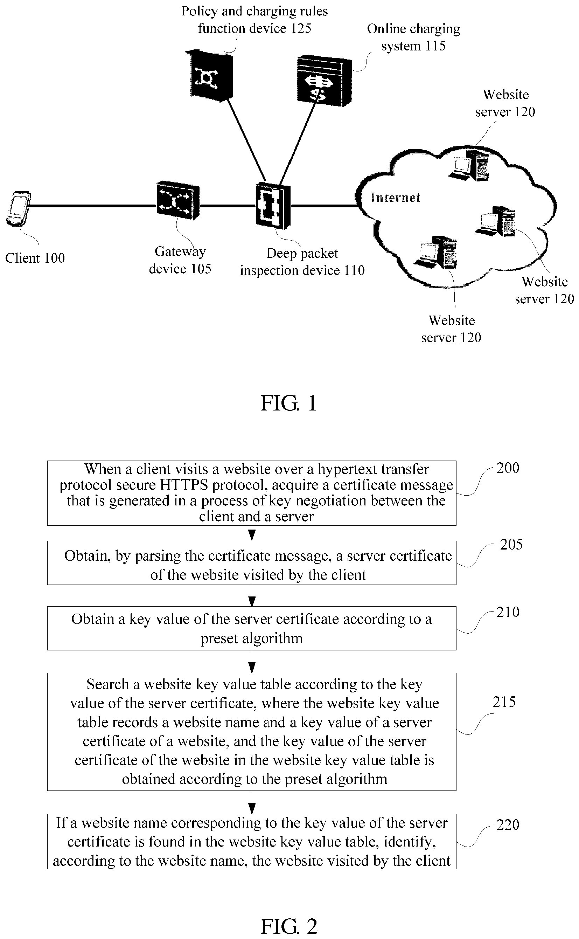

As shown in FIG. 1, FIG. 1 shows an application scenario of an embodiment of the present invention. In the application scenario shown in FIG. 1, a client 100 visits a website over hypertext transfer protocol secure (Hypertext Transfer Protocol Secure, HTTPS). A gateway device 105 can perform network access control on network visiting behavior of the client 100. A deep packet inspection (Deep Packet Inspection, DPI) device 110 can perform application-layer-based traffic inspection and control on the network visiting behavior of the client 100, may be configured to inspect and analyze network visiting traffic of the client 100, and can implement a policy and charging enforcement function (Policy and Charging Enforcement Function, PCEF), request a traffic quota of a user from an online charging system (Online Charging System, OCS) 115, and report traffic of the client 100, so that the OCS can charge the user according to the visiting traffic of the client 100. The DPI device 110 is deployed in a downlink of the gateway device 105, and a data packet generated in a process that the client 100 visits the website passes through the gateway device and the DPI device and then arrives at a website server 120 to be visited. The DPI device 110 analyzes the traffic of the client 100 to identify the website visited by the client 110, and controls the network visiting behavior of the client 100 according to the identified website, for example, if a certain user participates in a charging package service, the DPI device 110 performs charging management on visiting traffic of the client 100 of the user according to a package charging policy set by a policy and charging rules function (Policy and Charging Rules Function, PCRF) device 125 for the user. If the website visited by the client 100 is a website in the package, the DPI device 110 does not collect traffic statistics on network visiting traffic of the client 100, and if the website visited by the client 100 is not a website in the package, the DPI device 110 collects traffic statistics on network visiting traffic of the client 100 and reports a result of the traffic statistics of the client 100 to the online charging system 115 for charging processing. It may be understood that the charging management performed on the network visiting behavior of the client 100 according to the identified website in this application scenario is only one type of management on network behavior of the client 100, and in a practical application, traffic control, filtering, or the like may further be performed for the user according to the identified website.

It may be understood that the client 100 may be a device that can implement network visiting, such as a mobile phone and a computer, and the gateway device 105 may be a gateway GPRS support node (Gateway GPRS Support Node, GGSN), a packet data gateway (Packet Data Gateway, PDG), or the like, which is not limited herein.

FIG. 2 is a flowchart of a method for identifying a website according to an embodiment of the present invention. The method is applied to a scenario in which a client visits a website over an HTTPS protocol and may be executed by the DPI device 110 shown in FIG. 1. The method includes:
Step 200: When a client visits a website over an HTTPS protocol, acquire a certificate message that is generated in a process of key negotiation between the client and a server of the website. Then proceed to step 205.

With reference to what shown in FIG. 1, when the client 100 visits a website over an HTTPS protocol, the client 100 performs key negotiation with the server 120 of the visited website, and the key negotiation process may be performed according to a transport layer security (Transport Layer Security, TLS) protocol, where the TLS protocol is an encryption protocol providing a confidential and secure channel on the Internet, the server certificate is a certificate that is used to prove a usage type of the server and applied for by the server to a certificate authority (Certificate Authority, CA) center, and the client trusts the server only when the certificate is used on the corresponding server. Because the DPI device 110 is deployed in the downlink of the gateway device 105, the DPI device 110 may acquire, through interception, a certificate Certificate message that is generated in a process of the key negotiation between the client 100 and the website server 120.

Step 205: Obtain, by parsing the certificate message, a server certificate of the website visited by the client. Then proceed to step 210.

In some cases, if the acquired Certificate message includes a certificate list CertificateList, the server certificate of the visited website may be obtained by extracting a first certificate in a certificate list CertificateList portion in the certificate message.

Step 210: Obtain a key value of the server certificate according to a preset algorithm. Then proceed to step 215.

In this embodiment of the present invention, content of the server certificate may be calculated by using the preset algorithm to obtain the key value of the server certificate. For example, the content of the server certificate may be calculated by adopting a digital digest algorithm to obtain the key value of the server certificate, where the digital digest algorithm may be a message-digest algorithm 5 (Message-Digest Algorithm, MD5) algorithm, a secure hash algorithm SHA-1, a RACE integrity primitives evaluation message digest (RACE Integrity Primitives Evaluation Message Digest, RIPEMD) algorithm, or the like, which is not limited herein.

Step 215: Search a website key value table according to the key value of the server certificate, where the website key value table records a website name and a key value of a server certificate of a website, and the key value of the server certificate of the website in the website key value table is obtained according to the preset algorithm. Then proceed to step 220.

In this embodiment of the present invention, the website key value table may be preset on the DPI device, and the preset website key value table records various website names and key values of server certificates of websites, where the key values of the server certificates in the website key value table are obtained by calculating content of server certificates of various websites according to the same algorithm as that adopted in step 210, for example, adopting the same digital digest algorithm. For example, if in step 215, the key values of the server certificates in the preset website key value table are obtained by using the MD5 algorithm, in step 210, when a user visits a website, a key value of a server certificate visited by the user also needs to be calculated by using the MD5 algorithm. Definitely, it may be understood that the website key value table may also be preset on another device as long as it can be accessed by the DPI device.

Step 220: If a website name corresponding to the key value of the server certificate is found in the website key value table, identify, according to the website name, the website visited by the client.

According to the digital digest algorithm such as MD5, a digital digest (a hash value, that is, the key value in this embodiment) can be obtained after hash calculation is performed on primitive information. Therefore, a feature of the digital digest algorithm is used in this embodiment of the present invention, where the feature of the digital digest algorithm indicates that different primitives can be converted into different hash values, content of a server certificate of a website that needs to be identified is calculated in advance by using a preset digital digest algorithm to obtain a key value of the server certificate, and the obtained key value of the server certificate and the name of the website are correspondingly stored in the website key value table. When the DPI device needs to identify the website visited by the user, a key value of a server certificate acquired from a data flow generated in a visiting process of the user may be compared with a preset key value of the server certificate, and if a key value of a server certificate of a website, which is the same as the key value of the server certificate of the website visited by the client, is found in the website key value table, the name of a website corresponding to the key value of the server certificate may be obtained according to the website key value table.

According to the method for identifying a website provided in this embodiment of the present invention, when a client visits a website over an HTTPS protocol, a server certificate of the website visited by the client is acquired, a key value of the server certificate is obtained according to a preset algorithm, a website key value table is searched for the obtained key value, and the website visited by the client is identified by using a website name that corresponds to the key value of the server certificate and is found in the website key value table. In this way, the website visited by the client can be identified even when the client visits the website over the HTTPS protocol.

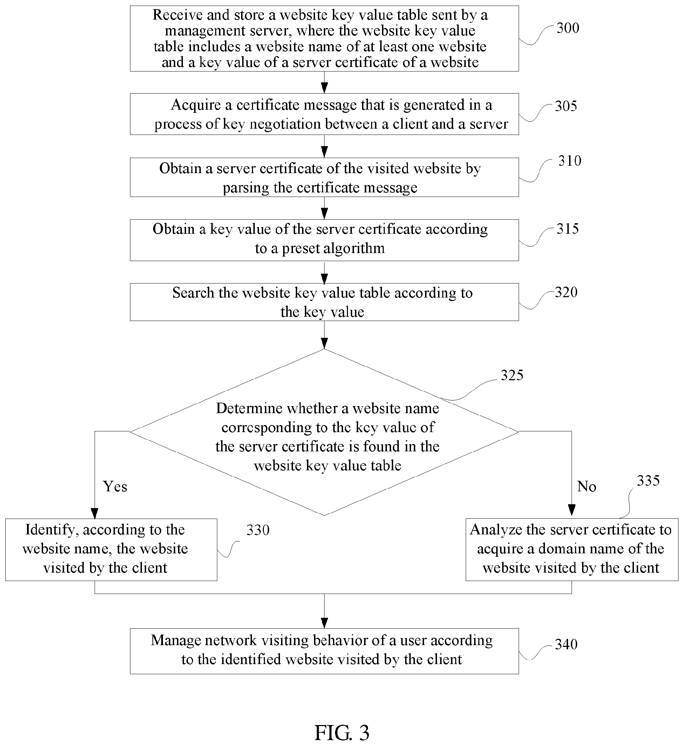

FIG. 3 is a flowchart of another method for identifying a website according to an embodiment of the present invention. The method is applied to a scenario in which a client visits a website over an HTTPS protocol and may be executed by the DPI device 110 shown in FIG. 1. As shown in FIG. 3, the method includes:
Step 300: Receive and store a website key value table sent by a management server, where the website key value table includes a website name of at least one website and a key value of a server certificate of the website. Then proceed to step 305.

In a practical application, the management server may acquire a server certificate of at least one website in advance, calculate a key value of the acquired server certificate of the at least one website according to a preset digital digest algorithm, record the key value of the server certificate obtained through calculation, and a website name in a website key value table, and send the website key value table to the DPI device.

Specifically, the management server may acquire, in advance, a server certificate of a website that needs to be concerned, for example, when charging management needs to be performed on user traffic, a server certificate of a website that can be visited as stipulated in a website package may be acquired in advance, such as a server certificate of a website such as Facebook or YouTube; and a server certificate of a website on which visit control needs to be performed may also be acquired in advance according to a requirement, which may specifically be set according to a requirement and is not limited herein. Moreover, the management server may visit, by using a browser in advance, a website that needs to be concerned, to download a server certificate of the website to the local, and then perform calculation on the downloaded server certificate by using a preset algorithm (for example, an MD5 algorithm) to acquire a key value of the server certificate, so as to obtain a website key value table. A form of the website key value table may be shown in table 1:

**Table 1 Website key value table**

| Serial No. | Website Domain Name | Certificate Check Value |
|---|---|---|
| 1 | Facebook | 2C89277EE96E8B15E2F9A90FED69B0B2 |
| 2 | YouTube | 5F43086FACDB301B74334183A0472584 |
| ... | ... | ... |

It may be understood that when a server certificate of a website is updated or a website that requires attention needs to be added or deleted, a preset website key value table needs to be updated in time. Specifically, when a server certificate of a website that requires attention is updated, a key value of the server certificate in the website key value table may be updated in time according to the updated server certificate of the website; when a website that requires attention needs to be added, a key value of a server certification and a website name are added into the website key value table according to the server certificate of the newly added website; or when a website that requires attention needs to be deleted, a key value of a server certification corresponding to the name of the website that needs to be deleted may be deleted from the website key value table.

Step 305: Acquire a certificate message that is generated in a process of key negotiation between a client and a server, where the certificate message carries a server certificate of a website visited by the client. Then proceed to step 310.

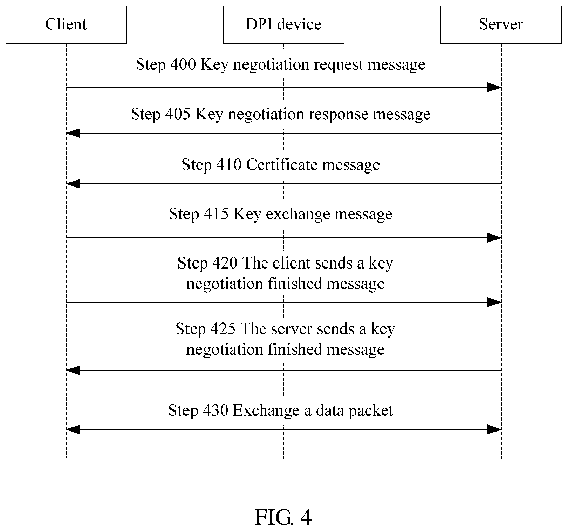

With reference to what shown in FIG. 1, when the client 100 visits a website over an HTTPS protocol, because the DPI device 110 is deployed in the downlink of the gateway device 105, the DPI device may acquire, through interception, a certificate message that is generated in a process of key negotiation between the client 100 and the website server 120, where the certificate message carries a server certificate of the website visited by the client. Specifically, a key negotiation process based on a TLS protocol and between the client and the server may specifically be shown in FIG. 4, and the key negotiation process may include:
Step 400: A client sends a key negotiation request message ClientHello to a server of a website to be visited. Then proceed to step 405.

In the ClientHello message, the client notifies the server of an encryption manner that can be supported by the client. Then proceed to step 405.

Step 405: The server returns a key negotiation response message ServerHello to the client. Then proceed to step 410.

The server that receives the ClientHello message returns a ServerHello message to the client and specifies, in the ServerHello message, that one encryption manner among encryption manners that can be supported by the client is adopted.

Step 410: The server sends a certificate Certificate message to the client, where the Certificate message includes a server certificate of the server. Then proceed to step 415.

After sending the ServerHello message to the client, the server subsequently sends a Certificate message, where the Certificate message includes a server certificate of the server, so that the client verifies the server certificate. The server certificate is a certificate that is used to prove a usage type of the server and applied for by the server to a certificate authority (Certificate Authority, CA) center, and the client trusts the server only when the certificate is used on the corresponding server. A format of the Certificate message may be described in table 2:

**Table 2 Certificate message format**

| CertificateList | | | |
|---|---|---|---|
| Length Hi | HandshakeType | Length | |
| ContentType | Version | | Length Lo |
| TCP | | | |
| IP | | | |
| Frame | | | |

That a value of a HandshakeType field is 11 indicates that the message is a Certificate message.

It should be noted that the Certificate message generally includes a certificate list CertificateList, the certificate list may include multiple certificates, and among the multiple certificates, a certificate listed in the back is used to verify whether a certificate listed in the front is a certificate on which authentication of an authority is performed successfully. For example, when the google google website is visited over HTTPS, multiple certificates are acquired, where a first certificate is a server certificate of google, a certificate in the back may be a certificate of a certain certification authority, and the certificate of the certification authority is used to prove that the server certificate of google is a legal certificate. Therefore, when a certificate list CertificateList is obtained, a first certificate is a server certificate of a website to be visited.

Step 415: After the verification of the client on the server certificate of the server succeeds, the client sends a key exchange ClientKeyExchange message to the server, where the ClientKeyExchange message includes a key that is encrypted by adopting a public key of the server. Then proceed to step 420.

Step 420: The client sends a key negotiation finished Finished message to the server, which indicates that the negotiation is completed. Then proceed to step 425.

Step 425: The server returns a key negotiation finished Finished message to the client, which indicates that the negotiation is completed. Then proceed to step 430.

Step 430: The client and the server exchange a data packet, where the data packet is a data packet that is encrypted by the negotiated key.

It may be understood that the DPI device may also be deployed in a network link in a bypass deployment manner, and when the DPI device is deployed in a bypass manner, the DPI device may obtain, in a manner such as mirror or copy, a negotiation packet that is generated in a process of the key negotiation between the client 100 and the website server 120, so as to obtain the certificate message in the process of the key negotiation between the client 100 and the website server 120.

Step 310: Obtain the server certificate of the visited website by parsing the certificate message. Then proceed to step 315.

Step 315: Obtain a key value of the server certificate of the visited website according to a preset algorithm. Then proceed to step 320.

Specifically, content of the server certificate may be calculated by using the preset algorithm to obtain the key value of the server certificate. For example, the content of the server certificate may be calculated by adopting a digital digest algorithm to obtain the key value of the server certificate, where the digital digest algorithm may include an algorithm such as MD5 or SHA-1, and the algorithm adopted in this step needs to be the same as an algorithm adopted when the management server presets a website key value table.

Step 320: Search the website key value table according to the key value of the server certificate. Then proceed to step 325.

Step 325: Determine whether a website name corresponding to the key value of the server certificate is found in the website key value table; if the website name corresponding to the key value of the server certificate is found, proceed to step 330; and otherwise, proceed to step 335.

Step 330: Identify, according to the website name, the website visited by the client. Then proceed to step 340.

Step 335: Analyze the server certificate of the website to obtain a domain name of the website visited by the user, and identify, according to the domain name of the website, the website visited by the client. Then proceed to step 340.

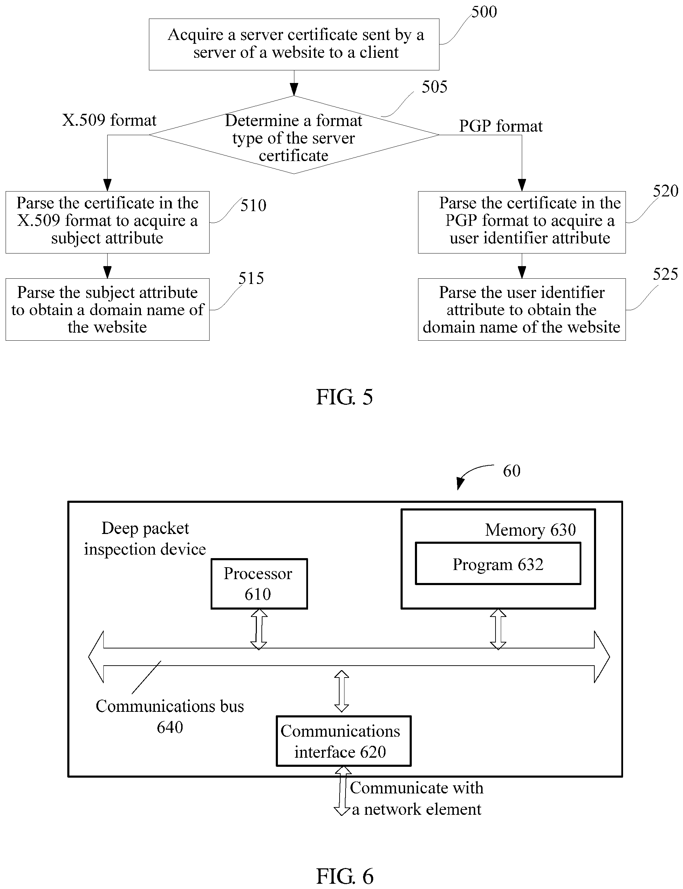

If the same key value of the server certificate is not found in the preset website key value table according to the obtained key value of the server certificate of the website, in some cases, for the purpose of identifying the name of the website visited by the client, the name of the website visited by the client may be identified by performing online analysis on the server certificate of the visited website obtained in step 310. A detailed analysis method may be shown in FIG. 5, including:
Step 505: Determine a format type of the server certificate of the visited website; if the server certificate of the visited website is a server certificate in an X.509 format, proceed to step 510; and if the server certificate of the visited website is a server certificate in a PGP format, proceed to step 520.

Persons skilled in the art may know that server certificates currently supported by a TLS protocol include server certificates in two formats: a server certificate in an X.509 format and a server certificate in a PGP format. During detailed analysis on the server certificate, the format type of the server certificate obtained in step 310 needs to be identified first, and then detailed analysis is performed on the server certificate according to a data structure of a certificate of a different format type. Specifically, in a process of negotiation, the format of the server certificate may be negotiated by using a CertificateType field in the ClientHello message and the ServerHello message. If the CertificateType field is 0, it indicates that the server certificate is a server certificate in the X.509 format, and if the CertificateType field is 1, it indicates that the server certificate is a certificate in the PGP format. X.509 is a digital certificate standard widely used and a public key infrastructure (Public Key Infrastructure, PKI) standard formulated by the International Telecommunication Union-Telecommunication Standardization Sector (ITU-T) for single sign-on (Single Sign-on, SSO) and privilege management infrastructure (Privilege Management Infrastructure, PMI); and PGP (Pretty Good Privacy, pretty good privacy) is mail encryption software based on an RSA public key encryption system, and it uses a pair of keys mathematically related, where one (a public key) is used to encrypt information, and the other (a private key) is used to decrypt information. Each public key and private key in the PGP are accompanied by a key certificate, that is, a key certificate in the PGP format, where the PGP format includes a certificate in an open Open PGP format.

Step 510: Parse the server certificate of the visited website according to a data structure of a certificate in the X.509 format to obtain a subject attribute in the server certificate. Then proceed to step 515.

The certificate in the X.509 format generally includes:
Certificate certificate;
Version version;
Serial Number serial number;
Algorithm ID algorithm identifier;
Issuer issuer;
Validity validity;
Subject subject;
Subject Public Key Info subject public key information;
Public Key Algorithm public key algorithm;
Subject Public Key public key;
Certificate Signature Algorithm certificate signature algorithm;
Certificate Signature information such as certificate signature.

The "Subject subject" attribute has domain name information of the website. Therefore, if the server certificate of the visited website obtained in step 310 is a certificate in the X.509 format, a Subject subject attribute of the certificate may be obtained according to a data structure of the certificate in the X.509 format. Definitely, it may be understood that when a digital format of the server certificate is determined, a version adopted by the certificate further needs to be determined, and the certificate is parsed according to a different version format.

Step 515: Obtain a domain name of the visited website by parsing the subject attribute.

For example, the domain name of the website visited by the client may be obtained by parsing the Subject subject attribute of the server certificate of the visited website. For example, in the server certificate in the X.509 format, a format of the Subject attribute may be: www.facebook.com.

Step 520: Obtain a user identifier attribute by parsing a certificate in the PGP format. Then proceed to step 525.

The key certificate of the PGP generally includes the following content:
key content: It is generally a key indicated by using a large number with the hundreds place;
key type: It indicates whether the key is a public key or a private key;
key length: It is used to indicate the length of the key and is generally indicated by using a binary digit;
key number: It is used to uniquely identify the key;
creation time: It is used to indicate the time when the certificate is created;
user identifier: It indicates information about a creator of the key, for example, the name or an email of the creator;
key fingerprint: It is a number with 128 digits and is a summary of key content and indicates a unique characteristic of the key; and
intermediary signature: It indicates a digital signature of an intermediary and is used to declare authenticity of the key and its owner, and it includes a key number and identifier information of the intermediary.

The "user identifier" portion is used to identify the information about the creator of the key, and the information may be indicated by using the name, email, or the like of the creator. Therefore, if the server certificate of the website is a key certificate in the PGP format, an identifier of the website can be learned from information in the "user identifier" portion in the server certificate. In this way, the website visited by the user can be identified.

Step 525: Obtain the domain name of the visited website by parsing the user identifier attribute.

Specifically, in the server certificate in the PGP format, the domain name of the website is included in the user identifier attribute, where the user identifier may be an identifier that can identify a user, for example, an email address or a name. For example, in the server certificate in the PGP format, the user identifier may be represented as: administrator@facebook.com.

Step 340: Manage a data flow generated in a visiting process of the client according to the identified website visited by the client.

After the website visited by the client is identified, network visiting behavior of the user may be managed according to the identified website visited by the client and a preset control policy, for example, whether charging management needs to be performed on traffic of the client, or control or filtering needs to be performed on visiting traffic of the client may be determined according to the name of the visited website and a preset website package policy, which is not limited herein.

According to the method for identifying a website provided in this embodiment of the present invention, when a client visits a website over an HTTPS protocol and the website visited by the client cannot be identified by using a preset website key value table, the website visited by the client can be identified in a manner of performing online analysis on a server certificate of the website visited by the client. The method for identifying a website provided in this embodiment of the present invention is more comprehensive and the accuracy of website identifying is higher. Moreover, according to the method for identifying a website provided in this embodiment of the present invention, when the website visited by the client is identified, network visiting behavior of a user can be managed in time according to the name of the identified website, thereby providing timelier and more efficient and refined network management for the user.

In an application scenario, when the method for identifying a website described in this embodiment of the present invention is used to perform traffic charging management on a user, a preset website key value table may include a domain name of a website that can be visited as stipulated in a package booked by the user and a key value of a server certificate of the website. When it is determined in step 325 that a key value of a server certificate of a website, which is the same as the key value of the server certificate of the visited website, is found in the website key value table, it indicates that the website visited by the client is in the package, and charging traffic statistics may not be collected on the visit of the client; and when it is determined in step 325 that a key value of a server certificate of a website, which is the same as the key value of the server certificate of the visited website, is not found in the website key value table, it indicates that the website visited by the client is not in the package, traffic statistics may be directly collected on visiting traffic of the client in time, and the collected traffic statistics are reported to a charging server for charging. In this application scenario, when a key value of a server certificate of a website, which is the same as the key value of the server certificate of the visited website, is not found in the website key value table in step 325, it is unnecessary to proceed to step 335 to obtain, by analyzing the server certificate of the website, the domain name of the website visited by the user, and control management may be directly performed on traffic of the client instead. When the method for identifying a website provided in this embodiment of the present invention is applied to charging management, the name of the website visited by the client is obtained by using a method of comparing key values of server certificates, so that identifying efficiency is high and an operation is simple, and therefore, control management can be performed timely on visiting traffic of the client and the quality of service of an operator can be improved.

FIG. 6 is a schematic diagram of a physical structure of a deep packet inspection (Deep Packet Inspection, DPI) device according to an embodiment of the present invention. As shown in FIG. 6, the DPI device 60 includes:
a processor (processor) 610, a communications interface (Communications Interface) 620, a memory (memory) 630, and a communications bus 640.

The processor 610, the communications interface 620, and the memory 630 communicate with each other through the communications bus 640.

The communications interface 620 is configured to communicate with a network element such as a gateway device, an online charging system (Online Charging System, OCS), or a management server.

The processor 610 is configured to execute a program 632, and may specifically execute related steps in the method embodiments shown in FIG. 2 and FIG. 3.

Specifically, the program 632 may include a program code, where the program code includes a computer operation instruction.

The processor 610 may be a central processing unit CPU, or an application specific integrated circuit ASIC (Application Specific Integrated Circuit), or one or more integrated circuits configured to implement this embodiment of the present invention.

The memory 630 is configured to store the program 632. The memory 630 may include a high-speed RAM memory and may further include a non-volatile memory (non-volatile memory), for example, at least one disk memory.

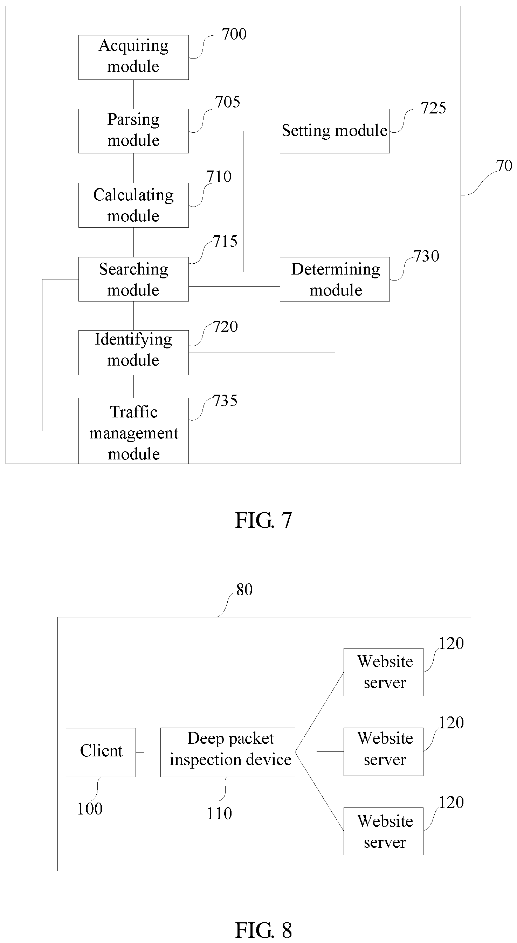

For specific implementation of each functional module in the program 632, reference may be made to a corresponding module in the embodiment described in FIG. 7, which is not described herein again.

FIG. 7 is a schematic structural diagram of a DPI device according to an embodiment of the present invention. As shown in FIG. 7, the DPI device 70 includes:
An acquiring module 700 is configured to, when a client visits a website over hypertext transfer protocol secure HTTPS, acquire a certificate message that is generated in a process of key negotiation between the client and a server of the website.

With reference to what shown in FIG. 1, when the client 100 visits a website over an HTTPS protocol, the client 100 performs key negotiation with the server 120 of the visited website, and the key negotiation process may be performed according to a transport layer security (Transport Layer Security, TLS) protocol, where the TLS protocol is an encryption protocol providing a confidential and secure channel on the Internet, the server certificate is a certificate that is used to prove a usage type of the server and applied for by the server to a certificate authority (Certificate Authority, CA) center, and the client trusts the server only when the certificate is used on the corresponding server. The acquiring module 700 in the DPI device may acquire, through interception, a certificate message that is generated in a process of the key negotiation between the client and the website server, where the certificate message carries a server certificate of the website visited by the client. Specifically, the acquiring module 700 may identify the certificate message by intercepting a packet in the process of the key negotiation between the client and the server and according to a HandshakeType field in the packet.

A parsing module 705 is configured to obtain, by parsing the certificate message acquired by the acquiring module 700, the server certificate of the website visited by the client.

In some cases, if the acquired Certificate message includes a certificate list CertificateList, the server certificate of the visited website may be obtained by extracting a first certificate in a certificate list CertificateList portion in the certificate message.

A calculating module 710 is configured to obtain a key value of the server certificate according to a preset algorithm.

In this embodiment of the present invention, content of the server certificate obtained by the parsing module 705 may be calculated by using the preset algorithm to obtain the key value of the server certificate. For example, the content of the server certificate may be calculated by adopting a digital digest algorithm to obtain the key value of the server certificate, where the digital digest algorithm may be a message-digest algorithm 5 (Message-Digest Algorithm, MD5) algorithm, a secure hash algorithm SHA-1, a RACE integrity primitives evaluation message digest (RACE Integrity Primitives Evaluation Message Digest, RIPEMD) algorithm, or the like, which is not limited herein.

A searching module 715 is configured to search a website key value table according to the key value of the server certificate obtained by the calculating module 710, where the website key value table records a website name and a key value of a server certificate of a website, and the key value of the server certificate of the website in the website key value table is obtained according to the preset algorithm.

In this embodiment of the present invention, the website key value table may be preset on the DPI device, where the key value of the server certificate in the website key value table adopts the same algorithm as that adopted during the calculation that is performed by the calculating module 710, for example, adopting the same digital digest algorithm. For example, if the key value of the server certificate in the preset website key value table is obtained by using the MD5 algorithm, when a user visits a website, the calculating module 710 also needs to calculate, by using the MD5 algorithm, a key value of a server certificate visited by the user. Definitely, it may be understood that the website key value table may also be preset on another device as long as it can be accessed by the DPI device.

An identifying module 720 is configured to, if the searching module 715 finds a website name corresponding to the key value of the server certificate in the website key value table, identify, according to the website name, the website visited by the client.

According to the digital digest algorithm such as MD5, a digital digest (a hash value, that is, the key value in this embodiment) can be obtained after hash calculation is performed on primitive information. Therefore, a feature of the digital digest algorithm is used in this embodiment of the present invention, where the feature of the digital digest algorithm indicates that different primitives can be converted into different hash values, content of a server certificate of a website that needs to be identified is calculated in advance by using a preset digital digest algorithm to obtain a key value of the server certificate, and the obtained key value of the server certificate and the name of the website are correspondingly stored in the website key value table. When the DPI device needs to identify the website visited by the user, a key value of a server certificate acquired from a data flow generated in a visiting process of the user may be compared, through the searching module 715, with a preset key value of the server certificate, and if a key value of a server certificate of a website, which is the same as the key value of the server certificate of the website visited by the client, is found in the website key value table, the identifying module 720 may obtain, according to the website key value table, the name of a website corresponding to the key value of the server certificate.

When a client visits a website over an HTTPS protocol, the DPI device in this embodiment of the present invention acquires a server certificate of the website visited by the client, obtains a key value of the server certificate according to a preset algorithm, searches a website key value table for the obtained key value, and identifies, by using a website name that corresponds to the key value and is found in the website key value table, the name of a website visited by a user. In this way, the name of the website visited by the user can be identified even when the client visits the website over the HTTPS protocol.

In another case, the DPI device 70 provided in this embodiment of the present invention may further include:
a setting module 725, configured to receive and store a website key value table sent by a management server, where the website key value table includes a website name of at least one website and a key value of a server certificate of the website, and the key value of the server certificate of the website in the website key value table is obtained according to the preset algorithm.

It may be understood that when a server certificate of a website is updated or a website that requires attention needs to be added or deleted, the setting module 725 needs to update a preset website key value table in time. Specifically, when a server certificate of a website that requires attention is updated, the setting module 725 may update a key value of the server certificate in the website key value table in time according to the updated server certificate of the website; when a website that requires attention needs to be added, the setting module 725 may add a key value of a server certification and a website name into the website key value table according to the server certificate of the newly added website; or when a website that requires attention needs to be deleted, the setting module 725 may delete, from the website key value table, a key value of a server certification corresponding to the name of the website that needs to be deleted.

In still another case, the DPI device 70 provided in the foregoing embodiment of the present invention may further include:
a determining module 730, configured to, when the searching module 715 does not find a website name corresponding to the key value of the server certificate of the visited website in the website key value table, determine a format type of the server certificate obtained by the parsing module 705, and trigger the identifying module 720.

The identifying module 720 is further configured to parse the server certificate of the visited website according to a certificate of a different format determined by the determining module 730, so as to identify the website visited by the client.

Specifically, if the determining module 730 determines that the format type of the server certificate of the website is a certificate in an X.509 format, the identifying module 720 obtains a domain name of the website from a subject attribute of the certificate and identifies, according to the domain name of the website, the website visited by the client; and if the determining module 730 determines that the format type of the server certificate of the website is a certificate in a PGP format, the identifying module 720 obtains the domain name of the website from a user identifier attribute of the certificate and identifies, according to the domain name of the website, the website visited by the client.

In still another case, the DPI device 70 provided in the foregoing embodiment of the present invention may further include:
a traffic management module 735, configured to manage, according to the website that is visited by the client and identified by the identifying module 720, a data flow generated in a visiting process of the client.

After the website visited by the client is identified, the traffic management module 735 may manage network visiting behavior of the user according to the website that is visited by the client and identified by the identifying module 720 and a preset control policy, for example, whether charging management needs to be performed on traffic of the client, or control or filtering needs to be performed on visiting traffic of the client may be determined according to the name of the visited website and a preset website package policy, which is not limited herein.

When a client visits a website over an HTTPS protocol and the website visited by the client cannot be identified by using a preset website key value table, the DPI device in this embodiment of the present invention may identify, in a manner of performing online analysis on a server certificate of the website visited by the client, the website visited by the client. In this way, website identifying is more comprehensive and the accuracy of website identifying is higher. Moreover, when identifying the website visited by the client, the DPI device provided in this embodiment of the present invention can manage network visiting behavior of a user in time according to the name of the identified website, thereby providing timelier and more efficient and refined network management for the user.

In an application scenario, when the DPI device described in this embodiment of the present invention is used to perform traffic charging management on a user, a preset website key value table may include a domain name of a website that can be visited as stipulated in a package booked by the user and a key value of a server certificate of the website. When the searching module 715 finds a key value of a server certificate of a website, which is the same as the key value of the server certificate of the visited website, in the website key value table, it indicates that the website visited by the client is in the package, and the traffic management module 735 may not collect charging traffic statistics on the visit of the client and may directly allow the client to pass; and when the searching module 715 does not find a key value of a server certificate of a website, which is the same as the key value of the server certificate of the visited website, in the website key value table, it indicates that the website visited by the client is not in the package, and the traffic management module 735 may directly collect traffic statistics on visiting traffic of the client in time and report the collected traffic statistics to a charging server for charging. In this application scenario, when the searching module 715 does not find a key value of a server certificate of a website, which is the same as the key value of the server certificate of the visited website, in the website key value table, it is unnecessary to trigger the determining module 730 and the identifying module 720 to obtain, by analyzing the server certificate of the website, the domain name of the website visited by the user, and control management may be directly performed on traffic of the client instead. When the DPI device provided in this embodiment of the present invention is applied to charging management, the DPI device may obtain, by comparing key values of server certificates, the name of the website visited by the client, so that identifying efficiency is high and an operation is simple, and therefore, control management can be performed timely on visiting traffic of the client and the quality of service of an operator can be improved.

FIG. 8 is a schematic structural diagram of a network system according to an embodiment of the present invention. As shown in FIG. 8, the network system includes: a client 100, a deep packet inspection DPI device 110, and at least one website server 120, and the DPI device is deployed in a communication link between the client 100 and the website server 120 in an in-path deployment manner, where:
the client 100 is configured to send a visit request based on an HTTPS protocol to the at least one website server 120, and perform key negotiation with the at least one website server 120;
the deep packet inspection DPI device 110 is configured to, when the client visits a website over hypertext transfer protocol secure HTTPS, acquire a certificate message that is generated in a process of key negotiation between the client and a server of the website; obtain, by parsing the certificate message, a server certificate of the website visited by the client; obtain a key value of the server certificate according to a preset algorithm; search a website key value table according to the key value of the server certificate, where the website key value table records a website name and a key value of a server certificate of a website, and the key value of the server certificate of the website in the website key value table is obtained according to the preset algorithm; and if a website name corresponding to the key value of the server certificate is found in the website key value table, identify, according to the website name, the website visited by the client; and
the website server 120 is configured to receive the network visit request sent by the client 100, and perform key negotiation with the client according to the network visit request.

In another case, the DPI device 110 is further configured to determine a format type of the server certificate if the website name corresponding to the key value of the server certificate is not found in the website key value table; obtain a domain name of the website from a subject attribute of the server certificate when the format type of the server certificate is an X.509 format; obtain the domain name of the website from a user identifier attribute of the server certificate when the format type of the server certificate is a PGP format; and identify, according to the domain name of the website, the website visited by the client.

In still another case, the DPI device 110 is further configured to manage, according to the name of the identified website visited by the client, a data flow generated in a visiting process of the client.

Specifically, for a detailed description of the DPI device 110 in this embodiment of the present invention, reference may be made to the foregoing related embodiment, which is not described herein again.

When a client visits a website over an HTTPS protocol, the network system in this embodiment of the present invention acquires a server certificate of the website visited by the client, obtains a key value of the server certificate according to a preset algorithm, and searches a website key value table for the obtained key value, and determines, by using a website name that corresponds to the key value of the server certificate and is found in the website key value table, the name of a website visited by a user. In this way, the name of the website visited by the user can be identified even when the client visits the website over the HTTPS protocol.

Persons of ordinary skill in the art may understand that all or a part of the steps in the foregoing method embodiments may be implemented by a program instructing relevant hardware. The foregoing program may be stored in a computer readable storage medium. When the program runs, the steps in the foregoing method embodiments are performed. The foregoing storage medium may include any medium capable of storing program code, such as a ROM, a RAM, a magnetic disk, or an optical disc.

It may be clearly understood by persons skilled in the art that, for the purpose of convenient and brief description, for a detailed working process of the foregoing device and module, reference may be made to a corresponding process in the foregoing method embodiments, which is not described herein again.

In the several embodiments provided in the present application, it should be understood that the disclosed device and method may be implemented in other manners. For example, the apparatus embodiments described in the foregoing are merely exemplary. For example, the module division is merely logical function division and may be other division in actual implementation. For example, a plurality of modules or components may be combined or integrated into another device, or some features may be ignored or not performed. In addition, the shown or discussed mutual couplings or direct couplings or communication connections may be implemented through some interfaces. The indirect couplings or communication connections between apparatuses or units may be implemented in electrical, mechanical, or other forms.

The modules described as separate parts may or may not be physically separate, and the parts displayed as modules may or may not be physical units, may be located in one position, or may be distributed on a plurality of network units. A part of or all of the modules may be selected according to actual needs to achieve the objectives of the solutions of the embodiments.

In addition, function modules in the embodiments of the present invention may be integrated into one processing module, or each of the modules may exist alone physically, or two or more modules may be integrated into one module.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, without departing of the scope of the invention defined by the appended claims.

## Claims

1. A method for identifying a website, comprising:
when a client visits a website over hypertext transfer protocol secure, HTTPS,
acquiring (200, 500) a certificate message that is generated in a process of key negotiation between the client and a server of the website;
obtaining (205), by parsing the certificate message, a server certificate of the website visited by the client;
and
identifying (220) the website visited by the client;
**characterized by** obtaining (210) a key value of the server certificate according to a preset algorithm;
searching (215) a website key value table according to the key value of the server certificate, wherein the website key value table records a website name and a key value of a server certificate of a website, and the key value of the server certificate of the website in the website key value table is obtained according to the preset algorithm; and
if a website name corresponding to the key value of the server certificate is found in the website key value table, identifying (220) the website visited by the client according to the website name.

2. The method for identifying a website according to claim 1, further comprising:
determining (505) a format type of the server certificate if the website name corresponding to the key value of the server certificate is not found in the website key value table;
obtaining (515) a domain name of the website from a subject attribute of the server certificate if the format type of the server certificate is an X.509 format, and
identifying, according to the domain name of the website, the website visited by the 1
client; and
obtaining (525) the domain name of the website from a user identifier attribute of the server certificate if the format type of the server certificate is a PGP format, and
identifying, according to the domain name of the website, the website visited by the client.

3. The method for identifying a website according to claim 1, further comprising:
not collecting charging statistics on traffic of the client if the website name corresponding to the key value of the server certificate is found in the website key value table; and
collecting charging statistics on the traffic of the client if the website name corresponding to the key value of the server certificate is not found in the website key value table.

4. The method for identifying a website according to any one of claims 1-3, wherein the acquiring (200) a certificate message that is generated in a process of key negotiation between the client and a server of the website comprises:
intercepting a packet that is generated in a process of the key negotiation between the client and the server of the website; and
identifying the certificate message according to a HandshakeType field in the packet.

5. A deep packet inspection device (70), comprising:
an acquiring module (700), configured to, when a client visits a website over hypertext transfer protocol secure HTTPS, acquire a certificate message that is generated in a process of key negotiation between the client and a server of the website;
a parsing module (705), configured to obtain, by parsing the certificate message acquired by the acquiring module, a server certificate of the website visited by the client; and
an identifying module (720), configured to identify the website visited by the client, **characterized by** a calculating module (710), configured to obtain a key value of the server certificate according to a preset algorithm; a searching module (715), configured to search a website key value table according to the key value of the server certificate obtained by the calculating module (710), wherein the website key value table records a website name and a key value of a server certificate of a website, and the key value of the server certificate of the website in the website key value table is obtained according to the preset algorithm;
wherein the identifying module (720) is configured to, if the searching module finds a website name corresponding to the key value of the server certificate in the website key value table, identify the website visited by the client according to the website name.

6. The deep packet inspection device (70) according to claim 5, further comprising:
a setting module (725), configured to receive and store the website key value table sent by a management server, wherein the website key value table comprises a website name of at least one website and a key value of a server certificate of the website.

7. The deep packet inspection device (70) according to claim 5 or 6, further comprising:
a determining module (730), configured to, when the searching module (715) does not find the website name corresponding to the key value of the server certificate in the website key value table, determine a format type of the server certificate obtained by the parsing module, and trigger the identifying module, wherein:
the identifying module (720) is further configured to obtain a domain name of the website from a subject attribute of the server certificate when the determining module determines that the format type of the server certificate of the website is an X.509 format, and identify, according to the domain name of the website, the website visited by the client; and obtain the domain name of the website from a user identifier attribute of the server certificate when the determining module determines that the format type of the server certificate of the website is a PGP format, and identify, according to the domain name of the website, the website visited by the client.

8. The deep packet inspection device (70) according to claim 5 or 6, further comprising:
a traffic management module (735), configured to not to collect charging statistics on traffic of the client when the searching module finds the website name corresponding to the key value of the server certificate in the website key value table; and collect charging statistics on the traffic of the client when the searching module does not find the website name corresponding to the key value of the server certificate in the website key value table.

9. The deep packet inspection device (70) according to any one of claims 5-8, wherein:
the acquiring module (700) is specifically configured to intercept a packet that is generated in a process of the key negotiation between the client and the server of the website, and identify the certificate message according to a HandshakeType field in the packet.

10. The deep packet inspection device (70) according to any one of claims 5-9, wherein:
the preset algorithm comprises an MD5 algorithm or an SHA-1 algorithm.

11. A deep packet inspection device (60) according to any one of claims 5-10, wherein:
the deep packet inspection device (60) comprises a processor (610), a communications interface (620), a memory (630), and a communications bus (640);
the processor (610) and the communications interface (620) perform communication through the communications bus (640);
the communications interface (620) is configured to perform communication;
the memory (630) is configured to store a program (632); and
the processor (610) is configured to execute the program (632) to implement said modules.

12. A network system (80), comprising a client (100), at least one website server (120), and the deep packet inspection device (110) according to any one of claims 5-10, wherein:
the client (100) is configured to send a visit request based on an HTTPS protocol to the at least one website server (120), and perform key negotiation with the at least one website server (120); and
the website server (120) is configured to receive the network visit request sent by the client (100), and perform key negotiation with the client (100) according to the network visit request.

## Patentansprüche

1. Verfahren zum Identifizieren einer Website, das Folgendes umfasst:
wenn ein Client eine Website über das sichere Hypertextübertragungsprotokoll, HTTPS, besucht,
Erfassen (200, 500) einer Zertifikatsnachricht, die in einem Prozess einer Schlüsselaushandlung zwischen dem Client und einem Server der Website erzeugt wird;
Erhalten (205) eines Serverzertifikats der Website, die vom Client besucht wird, durch Parsen der Zertifikatsnachricht;
und
Identifizieren (220) der Website, die vom Client besucht wird;
**gekennzeichnet durch**
Erhalten (210) eines Schlüsselwerts des Serverzertifikats gemäß einem voreingestellten Algorithmus;
Durchsuchen (215) einer Websiteschlüsselwertetabelle gemäß dem Schlüsselwert des Serverzertifikats, wobei die Websiteschlüsselwertetabelle einen Websitenamen und einen Schlüsselwert eines Serverzertifikats einer Website aufzeichnet und der Schlüsselwert des Serverzertifikats der Website in der Websiteschlüsselwertetabelle gemäß dem voreingestellten Algorithmus erhalten wird; und
wenn ein Websitename, der dem Schlüsselwert des Serverzertifikats entspricht, in der Websiteschlüsselwertetabelle gefunden wird, Identifizieren (220) der Website, die vom Client besucht wird, gemäß dem Websitenamen.

2. Verfahren zum Identifizieren einer Website nach Anspruch 1, das ferner Folgendes umfasst:
Bestimmen (505) eines Formattyps des Serverzertifikats, wenn der Websitename, der dem Schlüsselwert des Serverzertifikats entspricht, in der Websiteschlüsselwertetabelle nicht gefunden wird;
Erhalten (515) eines Domänennamens der Website aus einem Betreffattribut des Serverzertifikats, wenn der Formattyp des Serverzertifikats ein X.509-Format ist, und Identifizieren der Website, die vom Client besucht wird, gemäß dem Domänennamen der Website und
Erhalten (525) des Domänennamens der Website aus einem Benutzerkennungsattribut des Serverzertifikats, wenn der Formattyp des Serverzertifikats ein PGP-Format ist, und
Identifizieren der Website, die vom Client besucht wird, gemäß dem Domänennamen der Website.

3. Verfahren zum Identifizieren einer Website nach Anspruch 1, das ferner Folgendes umfasst:
kein Sammeln einer Abrechnungsstatistik über einen Verkehr des Clients, wenn der Websitename, der dem Schlüsselwert des Serverzertifikats entspricht, in der Websiteschlüsselwertetabelle gefunden wird; und
Sammeln einer Abrechnungsstatistik über den Verkehr des Clients, wenn der Websitename, der dem Schlüsselwert des Serverzertifikats entspricht, nicht in der Websiteschlüsselwertetabelle gefunden wird.

4. Verfahren zum Identifizieren einer Website nach einem der Ansprüche 1-3, wobei das Erfassen (200) einer Zertifikatsnachricht, die in einem Prozess einer Schlüsselaushandlung zwischen dem Client und einem Server der Website erzeugt wird, Folgendes umfasst:
Abfangen eines Pakets, das in einem Prozess der Schlüsselaushandlung zwischen dem Client und dem Server der Website erzeugt wird; und
Identifizieren der Zertifikatsnachricht gemäß einem Feld HandshakeType im Paket.

5. Pakettiefenprüfvorrichtung (70), die Folgendes umfasst:
ein Erfassungsmodul (700), das dazu ausgelegt ist, eine Zertifikatsnachricht, die in einem Prozess einer Schlüsselaushandlung zwischen dem Client und einem Server der Website erzeugt wird, zu erfassen, wenn ein Client eine Website über das sichere Hypertextübertragungsprotokoll, HTTPS, besucht;
ein Parsingmodul (705), das dazu ausgelegt ist, durch Parsen der Zertifikatsnachricht, die vom Erfassungsmodul erfasst wird, ein Serverzertifikat der Website, die vom Client besucht wird, zu erhalten;
und
ein Identifikationsmodul (720), das dazu ausgelegt ist, die Website, die vom Client besucht wird, zu identifizieren,
**gekennzeichnet durch**
ein Berechnungsmodul (710), das dazu ausgelegt ist, einen Schlüsselwert des Serverzertifikats gemäß einem voreingestellten Algorithmus zu erhalten;
ein Durchsuchungsmodul (715), das dazu ausgelegt ist, eine Websiteschlüsselwertetabelle gemäß dem Schlüsselwert des Serverzertifikats, der vom Berechnungsmodul (710) erhalten wird, zu durchsuchen, wobei die Websiteschlüsselwertetabelle einen Websitenamen und einen Schlüsselwert eines Serverzertifikats einer Website aufzeichnet und der Schlüsselwert des Serverzertifikats der Website in der Websiteschlüsselwertetabelle gemäß dem voreingestellten Algorithmus erhalten wird;
wobei das Identifikationsmodul (720) dazu ausgelegt ist, die Website, die vom Client besucht wird, gemäß dem Websitenamen zu identifizieren, wenn das Durchsuchungsmodul einen Websitenamen, der dem Schlüsselwert des Serverzertifikats entspricht, in der Websiteschlüsselwertetabelle findet.

6. Pakettiefenprüfvorrichtung (70) nach Anspruch 5, die ferner Folgendes umfasst:
ein Einstellungsmodul (725), das dazu ausgelegt ist, die Websiteschlüsselwertetabelle, die von einem Verwaltungsserver gesendet wird, zu empfangen und zu speichern, wobei die Websiteschlüsselwertetabelle einen Websitenamen von mindestens einer Website und einen Schlüsselwert eines Serverzertifikats der Website umfasst.

7. Pakettiefenprüfvorrichtung (70) nach Anspruch 5 oder 6, die ferner Folgendes umfasst:
ein Bestimmungsmodul (730), das dazu ausgelegt ist, einen Formattyp des Serverzertifikats, das vom Parsingmodul erhalten wird, zu bestimmen und das Identifikationsmodul auszulösen, wenn das Durchsuchungsmodul (715) den Websitenamen, der dem Schlüsselwert des Serverzertifikats in der Websiteschlüsselwertetabelle entspricht, nicht findet, wobei:
das Identifikationsmodul (720) ferner dazu ausgelegt ist, einen Domänennamen der Website aus einem Betreffattribut des Serverzertifikats zu erhalten, wenn das Bestimmungsmodul bestimmt, dass der Formattyp des Serverzertifikats der Website ein X.509-Format ist, und die Website, die vom Client besucht wird, gemäß dem Domänennamen der Website zu identifizieren und den Domänennamen der Website aus einem Benutzerkennungsattribut des Serverzertifikats zu erhalten, wenn das Bestimmungsmodul bestimmt, dass der Formattyp des Serverzertifikats der Website ein PGP-Format ist, und die Website, die vom Client besucht wird, gemäß dem Domänennamen der Website zu identifizieren.

8. Pakettiefenprüfvorrichtung (70) nach Anspruch 5 oder 6, die ferner Folgendes umfasst:
ein Verkehrsverwaltungsmodul (735), das dazu ausgelegt ist, keine Abrechnungsstatistik über einen Verkehr des Clients zu sammeln, wenn das Durchsuchungsmodul den Websitenamen, der dem Schlüsselwert des Serverzertifikats in der Websiteschlüsselwertetabelle entspricht, findet; und eine Abrechnungsstatistik über den Verkehr des Clients zu sammeln, wenn das Durchsuchungsmodul den Websitenamen, der dem Schlüsselwert des Serverzertifikats in der Websiteschlüsselwertetabelle entspricht, nicht findet.

9. Pakettiefenprüfvorrichtung (70) nach einem der Ansprüche 5-8, wobei:
das Erfassungsmodul (700) speziell dazu ausgelegt ist, ein Paket, das in einem Prozess der Schlüsselaushandlung zwischen dem Client und dem Server der Website erzeugt wird, abzufangen und die Zertifikatsnachricht gemäß einem Feld HandshakeType im Paket zu identifizieren.

10. Pakettiefenprüfvorrichtung (70) nach einem der Ansprüche 5-9, wobei:
der voreingestellte Algorithmus einen MD5-Algorithmus oder einen SHA-1-Algorithmus umfasst.

11. Pakettiefenprüfvorrichtung (60) nach einem der Ansprüche 5-10, wobei:
die Pakettiefenprüfvorrichtung (60) einen Prozessor (610), eine Kommunikationsschnittstelle (620), einen Speicher (630) und einen Kommunikationsbus (640) umfasst;
der Prozessor (610) und die Kommunikationsschnittstelle (620) eine Kommunikation über den Kommunikationsbus (640) durchführen;
die Kommunikationsschnittstelle (620) dazu ausgelegt ist, eine Kommunikation durchzuführen;
der Speicher (630) dazu ausgelegt ist, ein Programm (632) zu speichern; und
der Prozessor (610) dazu ausgelegt ist, das Programm (632) auszuführen, um die Module zu implementieren.

12. Netzwerksystem (80), das einen Client (100), mindestens einen Websiteserver (120) und die Pakettiefenprüfvorrichtung (110) nach einem der Ansprüche 5-10 umfasst, wobei:
der Client (100) dazu ausgelegt ist, auf Basis eines HTTPS-Protokolls eine Besuchsanforderung an den mindestens einen Websiteserver (120) zu senden und eine Schlüsselaushandlung mit dem mindestens einen Websiteserver (120) durchzuführen; und
der Websiteserver (120) dazu ausgelegt ist, die Netzwerkbesuchsanforderung, die vom Client (100) gesendet wird, zu empfangen und eine Schlüsselaushandlung mit dem Client (100) gemäß der Netzwerkbesuchsanforderung durchzuführen.

## Revendications

1. Procédé d'identification d'un site Web, comprenant les étapes consistant à :
quand un client visite un site Web sur un protocole de transfert hypertexte sécurisé (HTTPS), acquérir (200, 500) un message de certificat qui est généré dans un processus de négociation de clé entre le client et un serveur du site Web ;
obtenir (205), en analysant le message de certificat, un certificat de serveur du site Web visité par le client ;
identifier (220) le site Web visité par le client ;
**caractérisé par** les étapes consistant à
obtenir (210) une valeur de clé du certificat de serveur selon un algorithme prédéfini ; rechercher (215) une table de valeurs de clé de site Web selon la valeur de clé du certificat de serveur, la table de valeurs de clé de site Web enregistrant un nom de site Web et une valeur de clé d'un certificat de serveur d'un site Web, et la valeur de clé du certificat de serveur du site Web dans la table de valeurs de clé de site Web étant obtenue selon l'algorithme prédéfini ; et
si un nom de site Web correspondant à la valeur de clé du certificat de serveur est trouvé dans la table de valeurs de clé de site Web, identifier (220) le site Web visité par le client selon le nom de site Web.

2. Procédé d'identification d'un site Web selon la revendication 1, comprenant en outre les étapes consistant à :
déterminer (505) un type de format du certificat de serveur si le nom de site Web correspondant à la valeur de clé du certificat de serveur n'est pas trouvé dans la table de valeurs de clé de site Web ;
obtenir (515) un nom de domaine du site Web à partir d'un attribut de sujet du certificat de serveur si le type de format du certificat de serveur est un format X.509 et identifier, selon le nom de domaine du site Web, le site Web visité par le client ; et
obtenir (525) le nom de domaine du site Web à partir d'un attribut d'identifiant d'utilisateur du certificat de serveur si le type de format du certificat de serveur est un format PGP et identifier, selon le nom de domaine du site Web, le site Web visité par le client.

3. Procédé d'identification d'un site Web selon la revendication 1, comprenant en outre les étapes consistant à :
ne pas collecter de statistiques de facturation sur un trafic du client si le nom de site Web correspondant à la valeur de clé du certificat de serveur est trouvé dans la table de valeurs de clé de site Web ; et
collecter des statistiques de facturation sur le trafic du client si le nom de site Web correspondant à la valeur de clé du certificat de serveur n'est pas trouvé dans la table de valeurs de clé de site Web.

4. Procédé d'identification d'un site Web selon l'une quelconque des revendications 1 à 3, dans lequel l'acquisition (200) d'un message de certificat qui est généré dans un processus de négociation de clé entre le client et un serveur du site Web comprend les étapes consistant à :
intercepter un paquet qui est généré dans un processus de la négociation de clé entre le client et le serveur du site Web ; et
identifier le message de certificat selon un champ HandshakeType dans le paquet.

5. Dispositif d'inspection approfondie de paquet (70), comprenant :
un module d'acquisition (700), configuré pour, quand un client visite un site Web sur un protocole de transfert hypertexte sécurisé (HTTPS), acquérir un message de certificat qui est généré dans un processus de négociation de clé entre le client et un serveur du site Web ;
un module d'analyse (705), configuré pour obtenir, en analysant le message de certificat acquis par le module d'acquisition, un certificat de serveur du site Web visité par le client ; et
un module d'identification (720), configuré pour identifier le site Web visité par le client,
**caractérisé par**
un module de calcul (710), configuré pour obtenir une valeur de clé du certificat de serveur selon un algorithme prédéfini ;
un module de recherche (715), configuré pour rechercher une table de valeurs de clé de site Web selon la valeur de clé du certificat de serveur obtenue par le module de calcul (710), la table de valeurs de clé de site Web enregistrant un nom de site Web et une valeur de clé d'un certificat de serveur d'un site Web, et la valeur de clé du certificat de serveur du site Web dans la table de valeurs de clé de site Web étant obtenue selon l'algorithme prédéfini ;
le module d'identification (720) étant configuré pour, si le module de recherche trouve un nom de site Web correspondant à la valeur de clé du certificat de serveur dans la table de valeurs de clé de site Web, identifier le site Web visité par le client selon le nom de site Web.

6. Dispositif d'inspection approfondie de paquet (70) selon la revendication 5, comprenant en outre :
un module de définition (725), configuré pour recevoir et stocker la table de valeurs de clé de site Web envoyée par un serveur de gestion, la table de valeurs de clé de site Web comprenant un nom de site Web d'au moins un site Web et une valeur de clé d'un certificat de serveur du site Web.

7. Dispositif d'inspection approfondie de paquet (70) selon la revendication 5 ou 6, comprenant en outre :
un module de détermination (730), configuré pour, quand le module de recherche (715) ne trouve pas le nom de site Web correspondant à la valeur de clé du certificat de serveur dans la table de valeurs de clé de site Web, déterminer un type de format du certificat de serveur obtenu par le module d'analyse, et déclencher le module d'identification,
le module d'identification (720) étant en outre configuré pour obtenir un nom de domaine du site Web à partir d'un attribut de sujet du certificat de serveur quand le module de détermination détermine que le type de format du certificat de serveur du site Web est un format X.509 et identifier, selon le nom de domaine du site Web, le site Web visité par le client ; et obtenir le nom de domaine du site Web à partir d'un attribut d'identifiant d'utilisateur du certificat de serveur quand le module de détermination détermine que le type de format du certificat de serveur du site Web est un format PGP et identifier, selon le nom de domaine du site Web, le site Web visité par le client.

8. Dispositif d'inspection approfondie de paquet (70) selon la revendication 5 ou 6, comprenant en outre :
un module de gestion de trafic (735), configuré pour ne pas collecter de statistiques de facturation sur un trafic du client quand le module de recherche trouve le nom de site Web correspondant à la valeur de clé du certificat de serveur dans la table de valeurs de clé de site Web ; et collecter des statistiques de facturation sur le trafic du client quand le module de recherche ne trouve pas le nom de site Web correspondant à la valeur de clé du certificat de serveur dans la table de valeurs de clé de site Web.

9. Dispositif d'inspection approfondie de paquet (70) selon l'une quelconque des revendications 5 à 8, dans lequel :
le module d'acquisition (700) est spécifiquement configuré pour intercepter un paquet qui est généré dans un processus de la négociation de clé entre le client et le serveur du site Web et identifier le message de certificat selon un champ HandshakeType dans le paquet.

10. Dispositif d'inspection approfondie de paquet (70) selon l'une quelconque des revendications 5 à 9, dans lequel :
l'algorithme prédéfini comprend un algorithme MD5 ou un algorithme SHA-1.

11. Dispositif d'inspection approfondie de paquet (60) selon l'une quelconque des revendications 5 à 10,
le dispositif d'inspection approfondie de paquet (60) comprenant un processeur (610), une interface de communication (620), une mémoire (630) et un bus de communication (640) ;
le processeur (610) et l'interface de communication (620) réalisant une communication par l'intermédiaire du bus de communication (640) ;
l'interface de communication (620) étant configurée pour réaliser une communication ; la mémoire (630) étant configurée pour stocker un programme (632) ; et
le processeur (610) étant configuré pour exécuter le programme (632) pour mettre en œuvre lesdits modules.

12. Système de réseau (80), comprenant un client (100), au moins un serveur de site Web (120) et le dispositif d'inspection approfondie de paquet (110) selon l'une quelconque des revendications 5 à 10,
le client (100) étant configuré pour envoyer une demande de visite sur la base d'un protocole HTTPS à l'au moins un serveur de site Web (120) et pour réaliser une négociation de clé avec l'au moins un serveur de site Web (120) ; et
le serveur de site Web (120) étant configuré pour recevoir la demande de visite de réseau envoyée par le client (100) et pour réaliser une négociation de clé avec le client (100) selon la demande de visite de réseau.
